# EUROPEAN PATENT SPECIFICATION

(11) **EP 2 985 576 B1**
(45) Date of publication and mention of the grant of the patent: **23.09.2020**
(21) Application number: 13881971.9
(22) Date of filing: 08.04.2013
(51) Int. Cl.: B65B 39/00, G01G 19/393, B65B 37/18, B65B 9/20

(54) **COLLECTION HOPPER AND COMBINATION SCALE**
SAMMELTRICHTER UND KOMBINATIONSWAAGE
TRÉMIE DE COLLECTE ET BALANCE COMBINÉES

(43) Date of publication of application: 17.02.2016
(73) Proprietor: Yamato Scale Co., Ltd., Akashi-shi, Hyogo 673-0849 (JP)
(72) Inventor: NAGAI, Takayuki, Akashi-shi, Hyogo 673-0849 (JP)
(74) Representative: Ter Meer Steinmeister & Partner
(86) International application number: PCT/JP2013/002397
(87) International publication number: WO 2014/167594

(56) References cited:
- EP-A1- 1 821 084
- EP-A2- 0 113 586
- WO-A1-2006/054455
- JP-A- S5 988 628
- JP-A- 2009 257 976
- JP-A- 2009 288 157
- JP-A- 2009 288 157
- JP-A- 2010 281 745
- JP-U- S 608 842

## Description

### TECHNICAL FIELD

This invention relates to a collection hopper configured to collect weighed articles, such as snacks, and throw the collected articles in, for example, a packaging machine, and a combination scale using the collection hopper.

### BACKGROUND ART

Conventionally, articles, for example, snacks, are weighed by a combination scale, and the articles having a weight that falls within a predetermined weight range are thrown into a packaging machine located down below the combination scale and then packed in bags.

So far were disclosed the combination scales directed to improvements in weighing speed. Some of such combination scales are provided with a plurality of, for instance, two discharge paths to discharge articles from their weigh hoppers, wherein the weighed articles having a weight that falls within a predetermined weight range are discharged from one of the discharge paths and then the other, alternately (for example, patent document 1).

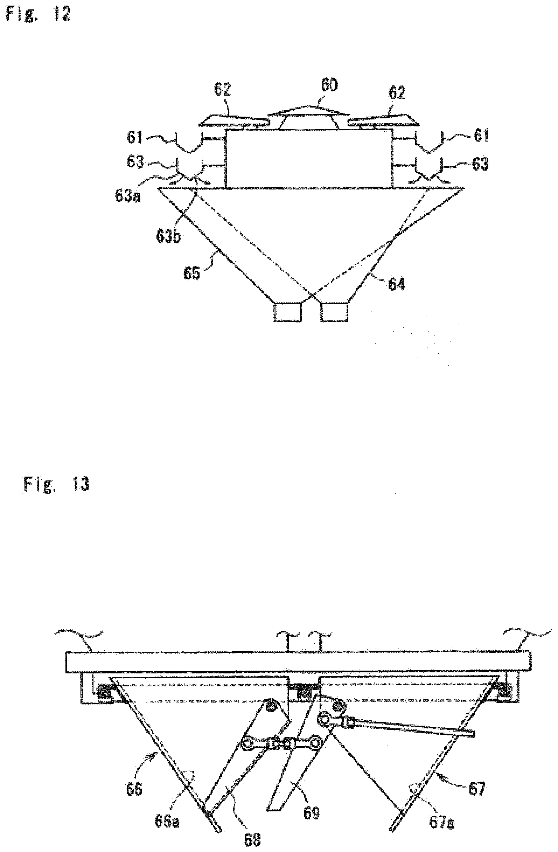

Fig. 12 is a schematic drawing of structural characteristics of the combination scale described in the patent document 1. This combination scale has a conical distribution feeder 60. The distribution feeder 60 receives the articles, such as snacks, from outside of the feeder and radially distributes the articles (not illustrated in the drawing) by way of vibrations. Around the distribution feeder 60 are a plurality of linear feeders 62 that feeds the articles by way of vibrations into feeding hoppers 61. The feeding hoppers 61 are disposed at positions below the delivery ends of the linear feeders 62. Below the feeding hoppers 61 are a plurality of weigh hoppers 63 correspondingly to these hoppers. The feeding hoppers 61 and the weigh hoppers 63 are arranged annularly around the distribution feeder 60 located at the center.

A pair of discharge gates 63a and 63b of the weigh hoppers 63 is allowed to open and close inward and outward to discharge the weighed articles having a weight that falls within a predetermined weight range inward and outward alternately. Below the weigh hoppers 63 are an inward collecting chute 64 and an outward collecting chute 65. The inward collecting chute 64 collects the articles discharged inward and drops them downward. The outward collecting chute 64 collects the articles discharged outward and drops them downward.

This combination scale weighs the articles, such as snacks, delivered into in the weigh hoppers 63 and performs combination calculations based on the weight values of the weighed articles to obtain a combination of the weigh hoppers 63 in which a total weight value of the weighed articles falls within a predetermined weight range. Then, the combination scale alternately discharges the articles in the combination of the weigh hoppers 63 downward into the inward collecting chute 64 or the outward collecting chute 65.

To weigh the articles using the combination scale having two discharge paths and throw the weighed articles having a weight that falls within a predetermined range of weight into the packaging machine, a pair of collection hoppers is conventionally disposed at positions below discharge ports of the two discharge paths. The paired collection hoppers temporarily store therein the discharged articles and then throw the articles by turns into the packaging machine in a timing-coordinated manner (for example, patent document 2).

Fig. 13 is a front view of the collection hoppers described in the patent document 2. A pair of collection hoppers 66 and 67 is disposed at positions below the discharge ports of the two discharge paths. The weighed articles having a weight that falls within a predetermined weight range are discharged from the two discharge paths and thrown into one of the collection hoppers 66 and 67 and the other, alternately. The collection hoppers 66 and 67 temporarily store therein the articles and then discharge them by turns in a timing-coordinated manner.

On opposing side surfaces of the collection hoppers 66 and 67 are provided discharge gates 68 and 69. The gates 68 and 69 operate in an interlocking manner such that one of the gates 68 (69) opens when the other gate 69 (68) closes. The articles in the collection hoppers 66 and 67 are discharged diagonally downward along inclined inner surfaces 66a and 67a.

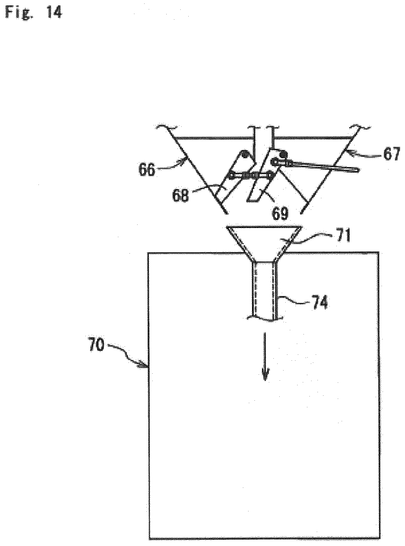

Below the paired collection hoppers 66 and 67, a packaging machine 70 is installed as illustrated in Fig. 14. The articles are thrown out of one of the collection hoppers 66 and 67 and the other, alternately, into an input port 71 of the packaging machine 70. A forming tube 74, which will be described later, is coupled to the lower end of the input port 70.

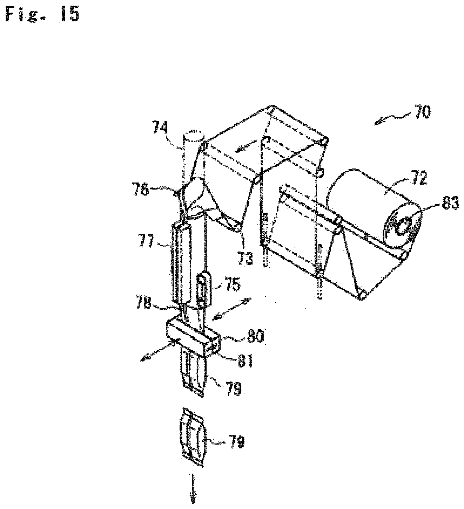

The patent document 3 describes a packaging machine. This packaging machine receives the articles having a weight that falls within a predetermined weight range from the collection hoppers of the combination scale and packs the articles in a bag. Fig. 15 is a schematic perspective view of principal structural elements in the packaging machine described in the patent document 3.

The packaging machine 70 has a tubular forming tube 74, a former 76 that winds a packing material 72 around the forming tube 74, a pull-down belt device 75, a vertical sealing device 77 for vertical weld-sealing, a lateral sealing device 80 for lateral weld-sealing, a roller 73, and the sheet-like packing material 72 wrapped around the roll 83.

The forming tube 74 is coupled to the input port 71 of the packaging machine 70 as illustrated in Fig. 14. As illustrated in Fig. 15, the forming tube 74 is provided with the former 76 that winds the sheet-like packing material 72 around the forming tube 74. The roller 73 is located in vicinity of the former 76. The sheet-like packing material 72 wrapped around the roll 83 is drawn out and taken up by the roller 73 and then wound around the forming tube 74 by the former 76.

The forming tube 74 has, on its lower part, the pull-down belt device 75 that feeds the packing material 72 downward. The pull-down belt device 75 is pushed against and attached to the forming tube 74. The vertical sealing device 77 is disposed at a position on substantially the same level in height as the pull-down belt device 75. The lateral sealing device 80 is disposed at a position below the forming tube 74.

The sheet-like packing material 72 is wound around the forming tube 74 and reformed in a tubular shape. The packing material 72 is sealed at its vertical edges by the vertical sealing device 77 and sealed at its lateral edge, or lower end, by the lateral sealing device 80. The articles are discharged from the collection hopper 66 or the collection hopper 67 of the combination scale and put in the lower-end sealed packing material 72 formed in a tubular shape. The upper end of the tubular packing material 72 is then sealed by the lateral sealing device 80 to form the packing material 72 into a bag (package). Then, the formed bag is cut and separated at the center of its laterally sealed part by a cutter 81 of the lateral sealing device 8.

JP 2009 299157 A discloses a collection hopper which can temporarily hold weighed matter ejected from an inside chute and to outside chutes and can facilitate the work of detachment and attachment, and a combination balance using it.

JP S5988628 A discloses a timing hopper for an automatic measuring apparatus. The document EP1821084 A1 discloses a further collection hopper according to the state of the art.

### PRIOR ART DOCUMENT

### PATENT DOCUMENT

PATENT DOCUMENT 1: Japanese Laid-Open Utility Model Application No. S61-84821
PATENT DOCUMENT 2: Japanese Laid-Open Patent Application No. S59-88628
PATENT DOCUMENT 3: Japanese Laid-Open Patent Application No. H10-218122

### SUMMARY OF THE INVENTION

### PROBLEMS TO BE SOLVED BY THE INVENTION

According to the packaging machine 70, the sheet-like packing material 72 is reformed in a tubular shape by the forming tube 74, and the tubular packing material 72 is drawn out downward with its two sides being vertically sealed by the vertical sealing device 77. The lower end of the vertically sealed tubular packing material 72 is further sealed laterally by the lateral sealing device 80. When the lateral sealing is over, the tubular packing material 72 receives and contains therein the articles discharged from the collection hopper 66 or the collection hopper 67 of the combination scale. Then, the lateral sealing is performed over between the upper end of a preceding bag containing the articles selected by the earlier combination calculation and the lower end of a succeeding bag containing the articles selected by the later combination calculation by the lateral sealing device 80.

In the case where a part of the articles to be put in the succeeding bag, i.e., a foremost one of the articles to be put in the succeeding bag arrives at the position of the lateral sealing device 80 before the lateral sealing is completed, the lateral sealing of the packing material may be imperfect due to the foremost article trapped in a part-to-be-sealed of the packing material.

To prevent the packaging machine 7 from undergoing such a sealing failure, there needs to be a predetermined distance between, of the articles discharged from the collection hopper 66 or the collection hopper 67, the rear end of a rearmost one of the articles in the preceding bag and the front end of a foremost one of the articles in the succeeding bag.

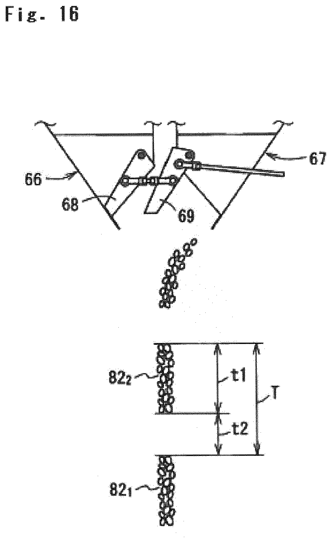

Fig. 16 is a drawing of a preceding group of articles 82₁ and a succeeding group of articles 82₂ of the articles discharged from the collection hopper 66 or the collection hopper 67.

To prevent the occurrence of imperfect lateral sealing in the packaging machine 7, there needs to be a time interval t2 (may be hereinafter termed as "product window") between a point of time when the rear end of a rearmost article in the preceding group of articles 82₁ arrives at the position of the lateral sealing device 80 and a point of time when the front end of a foremost article in the succeeding group of articles 82₂ arrives at the same position.

On the other hand, a weighing cycle time T is desirably shorter for higher weighing speeds. For this purpose, it is necessary to shorten a time interval t1 (may be hereinafter termed as "string out") between a point of time when, of a group of articles discharged from the collection hopper 66 or the collection hopper 67, the front end of a foremost article arrives at the position of the lateral sealing device 80 and a point of time when the rear end of a rearmost article arrives at the same position.

To shorten the string out t1, the paired collection hoppers 66 and 67 illustrated in Fig. 13 need to be brought into proximity to each other to make steep inclination angles of the inner surfaces 66a and 67a of the collection hoppers 66 and 67 that guide the articles to be discharged.

The conventional collection hoppers 66 and 67, however, need enough space to open and close the opposing discharge gates 68 and 69, leaving no choice but to secure the space between these two collection hoppers. To guide and discharge the articles toward the center of the input port 71 of the packaging machine 70 from the paired collection hoppers 66 and 67 thus distantly spaced from each other, however, it is not possible to incline the inner surfaces 66a and 67a at steep angles. This is the bottleneck in reduction of the string out t1, imposing restriction on improvements of the weighing speed.

The invention was accomplished to solve the existing technical problems. The invention is directed to reduction of the string-out by making steep inclination angles of the inner surfaces of the collection hoppers that collect and then discharge the articles delivered from the discharge paths, consequently attaining higher weighing speeds.

### SOLUTIONS TO THE PROBLEM

To this end, the invention provides the following technical features.
1) A collection hopper according to the invention is configured to temporarily store articles thrown therein from at least two discharge paths and then discharge the articles downward, the collection hopper including at least two storage chambers that store therein the articles discharged from the discharge paths, respectively, wherein
   the two storage chambers are integrally coupled into a single unit with a partition wall interposed therebetween as a boundary, and
   the storage chambers respectively have upper openings facing discharge ports of the discharge paths, lower openings through which the articles are to be discharged downward, and gates that open and close the lower openings.
   According to the collection hopper provided by the invention, the articles discharged from the discharge paths are temporarily stored in the storage chambers and then discharged downward, and the storage chambers are integrally coupled with the partition wall interposed therebetween as their boundary. As compared to the prior art wherein the articles are temporarily stored in different collection hoppers and then discharged downward, the invention may allow for locating the lower openings of the storage chambers in proximity to each other, thereby making steep the inclination angles of the inner surfaces of the respective storage chambers that guide the articles to the lower openings.
   This may effectively reduce time required for the rear end of a rearmost article, of a group of the articles discharged from the storage chambers, to pass a predetermined position right after the front end of a foremost article passed the predetermined position, or "string-out", allowing the articles to be gathered well and collectively discharged.
2) According to an aspect of the collection hopper provided by the invention, the storage chambers have a downwardly tapered shape, and the gates of the respective storage chambers oscillate around a supporting point to separately open the lower openings of the storage chambers.
   According to this aspect, the downwardly tapered storage chambers may allow for efficient discharge of the articles through the lower openings. The gates of the storage chambers that oscillate around a single supporting point may be compactly structured, and the lower openings of the storage chambers may be accordingly located in proximity to each other.
3) According to another aspect of the collection hopper provided by the invention, the gates of the storage chambers are oscillatably supported on a common supporting point shaft.
   The structural feature according to this aspect may eliminate the risk of misalignment that may occur with storage chamber gates supported on different supporting point shafts, allowing the gates to smoothly oscillate openably and closably around the common supporting point shaft.
4) According to yet another aspect of the collection hopper provided by the invention, the partition wall has a vertically flat shape, wherein each of the storage chambers has a storage space for the articles to be stored, the storage space being defined by the partition wall, a curved peripheral wall continuous to the partition wall, and the gate, and the gates respectively open and close the lower openings formed diagonally downward from the partition wall toward the peripheral walls.
   According to this aspect, the peripheral wall continuous to the partition wall which is the boundary between the storage chambers, has a curved shape. By virtue of the particular shape of the peripheral walls, the articles are unlikely to stay on their inner surfaces, smoothly dropping downward.
   The lower openings are formed diagonally downward from the partition wall, which is the boundary between the storage chambers, toward the peripheral walls. According to this structural feature, an area below the partition wall may be saved as a working space for the gates to open and close the lower openings.
5) According to yet another aspect of the collection hopper provided by the invention, the upper openings of the storage chambers have a semi-elliptical shape in top view.
   According to this aspect, each of the storage chambers has an upper opening formed in a semi-elliptical shape by the vertically flat partition wall and the curved peripheral wall continuous to the partition wall. By virtue of the particular shape of the peripheral walls, the articles are unlikely to stay on their inner surfaces, smoothly dropping downward.
6) A combination scale according to the invention is defined in claim 2.
   The combination scale according to the invention is advantageously characterized in that the storage chambers temporarily store therein the articles discharged through the discharge ports and then discharge the articles downward, and the storage chambers are integrally coupled into a single unit with the partition wall interposed therebetween as their boundary. As compared to the prior art wherein the articles discharged through the discharge ports are stored in different collection hoppers and then discharged downward, the lower openings of the storage chambers may be located in proximity to each other.
   By virtue of these structural advantages, the inner surfaces of the storage chambers that guide the articles to the lower openings to be discharged may be inclined at sharp angles. This may effectively reduce time required for the rear end of a rearmost article, of a group of the articles discharged from the storage chambers, to pass a predetermined position right after the front end of a foremost article passed the predetermined position, or "string-out", thereby improving the weighing speed with no risk of imperfect sealing due to some articles partly trapped in a part-to-be-sealed of the packing material in the packaging machine.
7) According to an aspect of the combination scale provided by the invention, the storage chambers have a downwardly tapered shape, and the gates of the storage chambers oscillate around a supporting point to separately open the lower openings of the storage chambers.

According to this aspect, the downwardly tapered storage chambers may allow for efficient discharge of the articles through the lower openings. The gates of the storage chambers that oscillate around a single supporting point may be compactly structured, and the lower openings of the storage chambers may be accordingly located in proximity to each other.

### EFFECTS OF THE INVENTION

The collection hopper according to the invention is advantageously characterized in that the storage chambers temporarily store therein the articles discharged from the discharge paths and then discharge the articles downward, and the storage chambers are integrally coupled into a single unit with the partition wall interposed therebetween as their boundary. As compared to the prior art wherein the articles are temporarily stored in the separate collection hoppers and then discharged downward, the collection hopper according to the invention may allow for locating the lower openings of the storage chambers in proximity to each other, thereby making steep inclination angles of the inner surfaces of the respective storage chambers that guide the articles to the lower openings to be discharged.

This may effectively reduce time required for the rear end of a rearmost article, of a group of the articles discharged from the storage chambers, to pass a predetermined position right after the front end of a foremost article passed the predetermined position, or "string-out", allowing the articles to be gathered well and collectively discharged.

The collection hopper according to the invention may further advantageously reduce time required for the rear end of a rearmost article, of a group of the articles discharged from the storage chambers, to arrive at the packaging machine right after the front end of a rearmost article arrived at the packaging machine, or "string-out". This may successfully avoid the occurrence of imperfect sealing in the packaging machine, enabling higher weighing speeds.

### BRIEF DESCRIPTION OF THE DRAWINGS

Fig. 1 is a longitudinal front view of a combination scale according to an embodiment of the invention.
Fig. 2 is a top view of collecting chutes of the combination scale.
Fig. 3 is a partly broken front view of the collecting chutes and a collection device.
Fig. 4 is a front view of the collection device.
Fig. 5 is a perspective view of the collection device.
Fig. 6 is a top view of an upper collection hopper.
Fig. 7 is a side view of the upper collection hopper.
Fig. 8 is a view of the upper collection hopper taken along A-A line of Fig. 7.
Fig. 9 is a perspective view of a discharge gate driving structure of the upper collection hopper.
Fig. 10 is a longitudinal front view of a lower collection hopper.
Fig. 11 is a side view of one of discharge gates of the lower collection hopper.
Fig. 12 is a schematic view of a conventional combination scale having a plurality of discharge paths.
Fig. 13 is a front view of a conventional collection hopper configured to receive articles thrown therein from two discharge paths.
Fig. 14 is a schematic view of the collection hopper illustrated in Fig. 13 and vicinity of an input port of a packaging machine.
Fig. 15 is a schematic perspective view of principal structural elements of the packaging machine.
Fig. 16 is a drawing of a preceding group of articles and a succeeding group of articles discharged from the collection hopper.

### EMBODIMENTS OF THE INVENTION

Hereinafter, an embodiment of the invention is described in detail referring to the accompanying drawings.

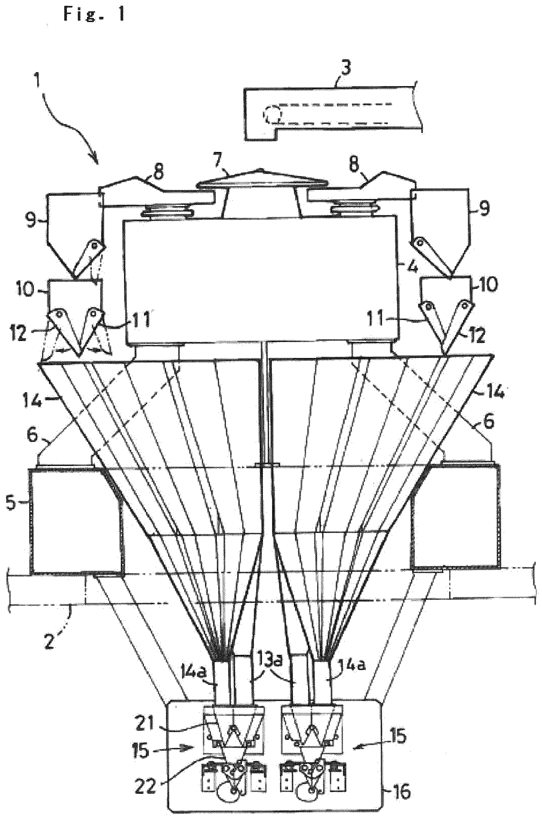

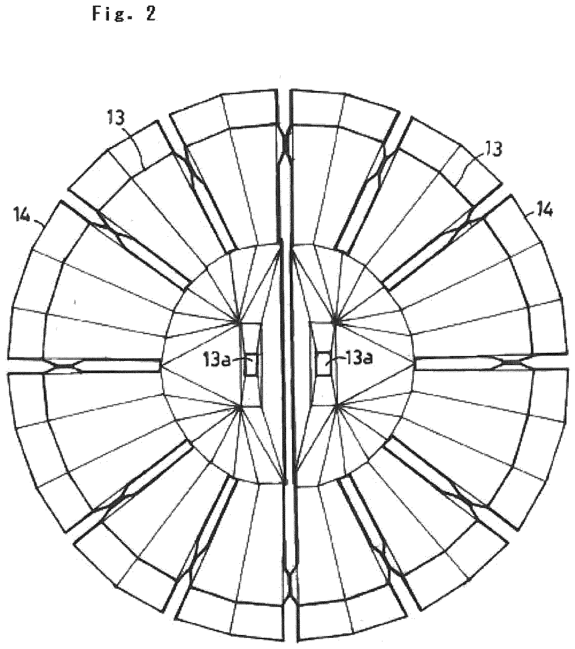

Fig. 1 is a longitudinal front view of a combination scale 1 provided with collection hoppers according to the embodiment. Fig. 2 is a transverse top view of its principal structural elements.

The combination scale 1 is used to weigh a certain quantity of articles to be packaged, typically sweets such as gummy candies. The combination scale 1 is disposed on a frame 2. The articles to be weighed are delivered by a feeding conveyer 3 into the combination scale 1 from a position upward at the center of the combination scale 1. The articles having a weight that falls within a predetermined weight range are discharged downward from a center part of the combination scale 1. The discharged articles are thrown into a packaging machine located down below the frame 2, not illustrated in the drawing, and packed in a bag.

The combination scale has a center body 4 at its center. The center body 4 is coupled to and supported by bases 5 disposed on the frame 2 with leg-like members 6 interposed therebetween. A distribution feeder 7 having a conical shape is disposed on the center body 4. The distribution feeder 7 radially distributes by way of vibrations the articles carried by the feeding conveyer 3 and arriving there. Around the distribution feeder 7 are a plurality of linear feeders 8 that transfer by way of vibrations the distributed articles further outward. At positions below delivery ends of the liner feeders 8, there are feeding hoppers 9 and weigh hoppers 10. The feeding hoppers 9 temporarily store therein and then discharge the articles received from the linear feeders 8. The weigh hoppers 10 are hoppers to be combined to store therein and weigh the articles discharged from the feeding hoppers 9. The hoppers 9 and 10 are attached to the center body 4.

Multiple weigh modules (28 modules in this example) are arranged annularly. Each of the weigh modules has a sequence of the linear feeder 8, feeding hopper 9, and weigh hopper 10. According to this embodiment, one half and the other half of the multiple weigh modules; a group of left-half modules and a group of right-half modules in Figs. 1 and 2 (respectively 14 modules in this example), independently perform combination weighing and discharge of articles.

The weigh hoppers 10 each have a pair of discharge gates; an inward discharge gate 11 and an outward discharge gate 12, thereby optionally discharging the weighed articles inward or outward.

In the combination scale 1, combination calculations are separately performed for the group of 14 left-half weigh hoppers 10 and the group of the 14 right-half weigh hoppers 10. The weight values of the weighed articles in the 14 weigh hoppers 10 are variously combined to select a combination of the weigh hoppers 10 in which a total weight value falls within a predetermined weight range. The articles of the weigh hoppers 10 selectively combined are collectively discharged inward or outward alternately.

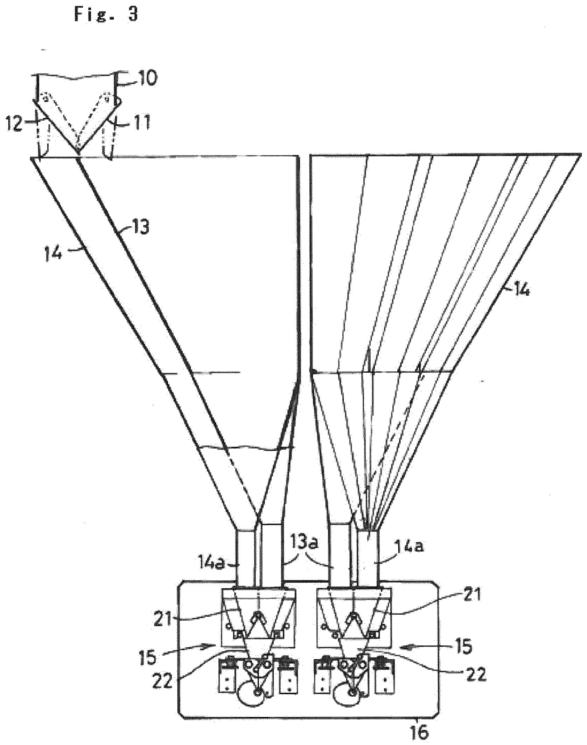

As illustrated in Fig. 3, inner and outer dual collecting chutes 13 and 14 are installed below the weigh hoppers 10. The inner and outer dual collecting chutes 13 and 14 collect the articles discharged inward or outward by selectively opening the discharge gates 11 and 12 and guide the articles downward toward the center of the combination scale 1. The inner and outer dual chutes 13 and 14 on the left and right sides are independent from each other correspondingly to the left-half weigh modules and the right-half weigh modules.

According to this embodiment, the left-half weigh modules and the right-half weigh modules respectively have two discharge paths. The two discharge paths are a discharge path provided by the inner collecting chute 13, and discharge path provided by the outer collecting chute 14.

Below the left-half collecting chutes 13 and the right-half collecting chutes 14, there are two collection devices 15 that collect and temporarily store therein the articles guided downward by the collecting chutes 13 and 14. The collection devices 15 are identically structured. The collection devices 15 are disposed in juxtaposition, respectively on the left and right, on a frame 16 coupled to and supported by the bases 5 illustrated in Fig. 1. The collection devices 15 respectively throw the articles temporarily stored therein into an input port of the packaging machine down below, not illustrated in the drawing, by desired timings. There may be two packaging machines correspondingly to the collection devices 15, or a twin-type single packaging machine with two input ports.

The collection devices 15 each have a collection hopper 21 on its upper side (hereinafter, "upper collection hopper") and a collection hopper 22 on its lower side (hereinafter, "lower collection hopper"). A detailed description is hereinafter given to their structures.

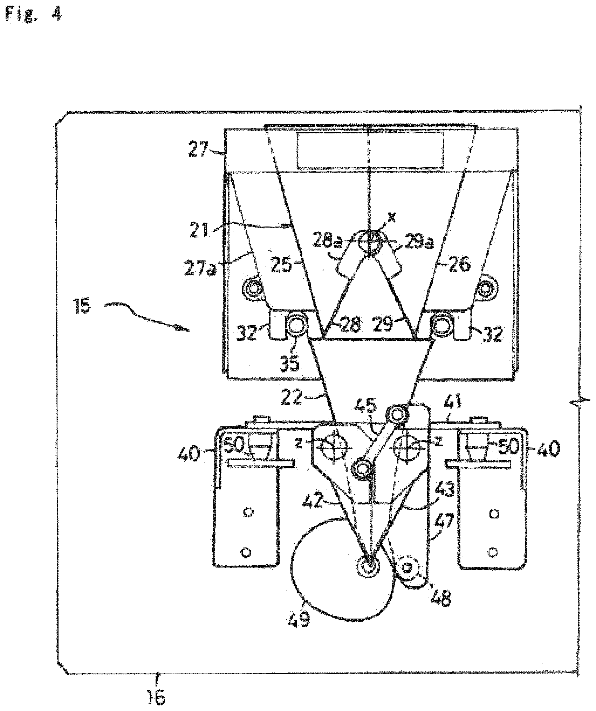

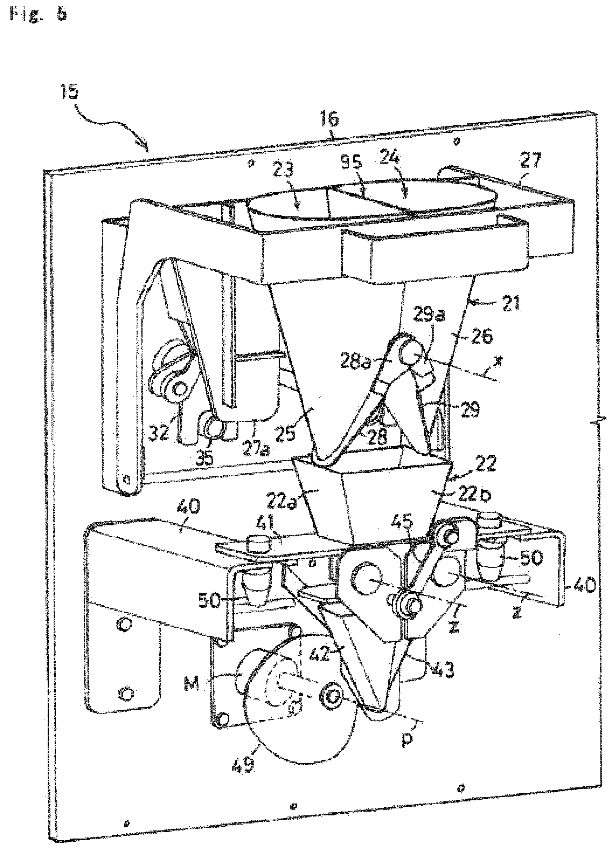

Fig. 4 is a front view of the collection device 15. Fig. 5 is a perspective view of the collection device 15. The upper collection hopper 21 has a pair of left and right hopper bodies 25 and 26 integrally coupled into a single unit. The hopper bodies 25 and 26 respectively form storage chambers 23 and 24 having a downwardly tapered shape. The hopper bodies 25 and 26 are supported on a front surface of the frame 16 by means of a support frame 27 so that openings at upper ends of the storage chambers 23 and 24 respectively face discharge ports 13a and 14a at lower ends of the inner and outer collecting chutes 13 and 14.

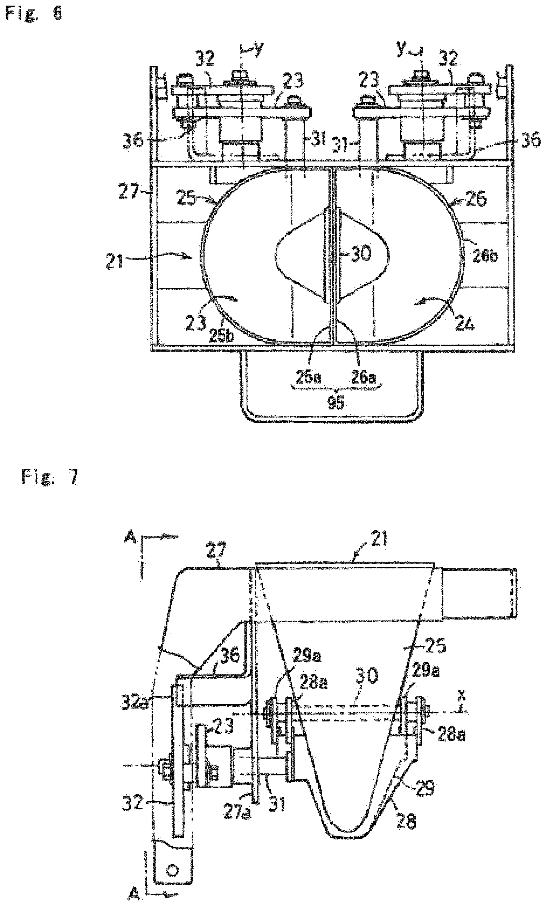

As illustrated in the top view of Fig. 6, the overall shape of the upper end openings of the upper collection hopper 21 is elliptical in top view. The upper collection hopper 21 is partitioned into the storage chambers 23 and 24 by a vertically flat partition wall 95 interposed at the center in the left and right direction thereof as their boundary. Therefore, shapes in top view of the respective upper end openings of the left and right storage chambers 23 and 24 are semi-elliptical which are left and right two halves of the elliptical shape.

According to this embodiment, the partition wall 95 is formed by integrally joining vertical walls 25a and 26a of the hopper bodies 25 and 26 defining the storage chambers 23 and 24 as illustrated in Fig. 6. The vertical walls 25a and 26a and semi-elliptical peripheral walls 25b and 26b continuous to these vertical walls respectively form the hopper bodies 25 and 26.

At opposite positions on the inner sides of the hopper bodies 25 and 26 are provided discharge gates 28 and 29 as illustrated in Figs. 4 and 5. The discharge gates 28 and 29 openably and closably oscillate around a common supporting point x horizontally extending in the front-rear direction of the apparatus.

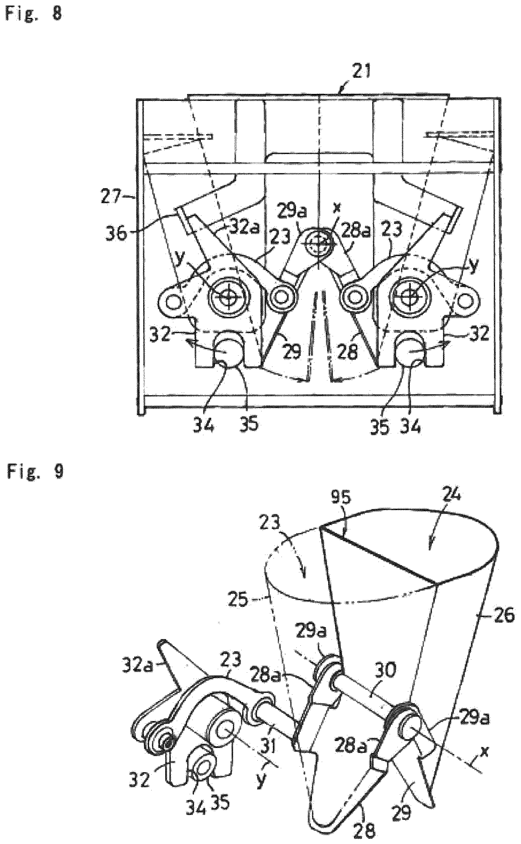

Fig. 7 is a side view of the upper collection hopper 21. Fig. 8 is a view of the upper collection hopper 21 taken along A-A line Fig. 7. Fig. 9 is a perspective view of a discharge gate driving structure of the upper collection hopper 21.

A supporting point shaft 30 is fixedly provided so as to bridge, along the supporting point x, across a lower end of the partition wall 95 between the hopper bodies 25 and 26. There are two pairs of supporting point bosses 28a and 29a in the front-rear direction that are protruding from upper ends of the discharge gates 28 and 29. The supporting point bosses 28a and 29a of each pair are rotatably supported, in an alternately intersecting manner, to one end and the other end of the supporting point shaft 30 in the front-rear direction.

The hopper body 25 defining, of two storage chambers partitioned by the partition wall 95 located at the center as their boundary, the storage chamber 23 on the left side has a lower opening formed by cutting out the peripheral wall diagonally downward left from the lower end of the partition wall 95. The hopper body 26 defining the storage chamber 24 on the right side has a lower opening formed by cutting out the peripheral wall diagonally downward right from the lower end of the partition wall 95. The discharge gates 28 and 29 open and close the lower openings of the storage chambers 23 and 24.

The left storage chamber 23, when the discharge gate 28 opens, discharges the articles diagonally downward toward the center, i.e., diagonally downward right. The right storage chamber 24, when the discharge gate 29 opens, discharges the articles diagonally downward toward the center, i.e., diagonally downward left.

Operation shafts 31 are respectively protruding rearward (upward in Fig. 6, leftward in Fig. 7) from the discharge gates 28, 29. A pair of left and right operating members 32 is mounted, rotatably around a supporting point y extending in the front-rear direction, to left and right brackets 27a extending downward from the support frame 27. The operating member 32 and the operation shaft 31 of the discharge gates 28, 29 are coupled by a curved link 23 in an interlocking manner.

As illustrated in Figs. 8 and 9, the operating member 32 has a recess 34 that opens downward. A drive pin 35 engageably fitted in the recess 34 rotates back and forth around the supporting point y by a drive motor, not illustrated in the drawings, installed behind the frame 16, thereby rotating the operating member 32 forward and backward. This action of the operating member 32 openably and closably oscillates the discharge gates 28 and 29 link-coupled to the operating member 32. Specifically, when one of the gates 28 (29) opens, dropping the articles diagonally downward, the other discharge gate 29 (28) closes, receiving the articles from the collecting chute 13 (14).

The operating member 32 has a regulating protrusion 32a. The regulating protrusion 32a abutting a stopper 36 behind the bracket 27a, as illustrated in Fig. 8, regulates the oscillatory motions of the discharge gates 28 and 29 in directions in which they are closed.

As illustrated in Figs. 4 and 5, the lower collection hopper 22 located below the upper collection hopper 21 is supported by means of a stay 41 on a support bracket 40 protruding on the front surface of the frame 16 in a manner that faces the lower openings of the storage chambers 23 and 24 of the upper collection hopper 21. The lower collection hopper 22 has a pair of left and right discharge gates 42 and 43, and a single storage chamber is defined when the paired discharge gates 42 and 43 are closed.

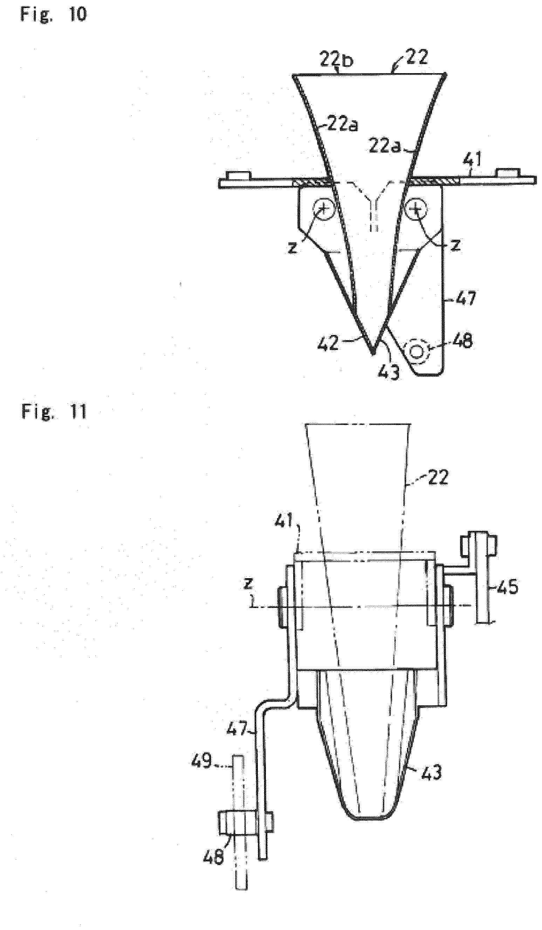

Fig. 10 is a longitudinal front view of the lower collection hopper 22. Fig. 11 is a side view of the discharge gate 43 of the lower collection hopper 22.

As illustrated in Fig. 5, the lower collection hopper 22 has an upper opening rectangular in top view. Referring to Fig. 10, left and right peripheral walls 22a respectively have surfaces protrudingly curved inward at a large curvature in their entirety and tapered downward. On the other hand, front and rear peripheral walls 22b respectively have inner surfaces flattened in their entirety. The lower ends of the front and rear peripheral walls 22b have a sharp-angled shape extending more downward than the left and right peripheral walls 22a.

The left and right discharge gates 42 and 43 are disposed in a manner that faces the lower ends of the front and rear peripheral walls 22b respectively on the left and right sides. The left and right discharge gates 42 and 43 are supported by means of the stay 41 so as to openably and closably oscillate around a supporting point z horizontally extending in the front-rear direction. The discharge gates 42 and 43 are oscillatably energized in directions in which they are closed by tensile springs not illustrated in the drawings.

A link 45 is provided so as to bridge across a lower part than the supporting point z of the discharge gate 42 and an upper part than the supporting point z of the discharge gate 43 to allow for oscillatory motions of these gates in opposite directions. Thus, the discharge gates 42 and 43 jointly open and close.

A cam follower 48 consisting of a floating roller is attached to an edge of an operating arm 47 extending downward from the discharge gate 43. An operating cam 49 that abuts the cam follower 48 is mounted to the drive shaft of a motor M illustrated in Fig. 5 and rotated around an axis p. The motor M is mounted to the frame 16. In concert with the rotation of the operating cam 49, the cam follower 48 runs on a diametrically large portion of the operating cam 49. Then, the left and right discharge gates 42 and 43 jointly open against an energizing force exerted to close them, and the cam follower 48 moves following a diametrically small portion of the operating cam 49. Then, the left and right discharge gates 42 and 43 jointly close by spring tension.

The stay 41 supporting the lower collection hopper 22 is fixedly fastened to the support bracket 40 by means of connecting bolts 50 equipped with left and right handles. When the connecting bolts 50 are loosened, the stay 41 can be pulled out forward and removed.

This embodiment provides the technical and structural features described thus far. The articles guided to and collected in the inner collecting chute 13 or the outer collecting chute 14 are thrown into and temporarily stored in the storage chamber 23, 24 of the upper collection hopper 21. Then, the articles are thrown into the lower collection hopper 22 by opening either one of the discharge gates 28 and 29.

The articles guided to and collected in the inner collecting chute 13 are thrown into and temporarily stored in the right storage chamber 24 of the upper collection hopper 21. When the discharge gate 28 of the left storage chamber 23 is closed, the discharge gate 29 is opened to throw the articles into the lower collection hopper 22. The articles are temporarily stored in the lower collection hopper 22 and then thrown into the packaging machine vertically downward not illustrated in the drawings.

The articles guided to and collected in the outer collecting chute 14 are thrown into and temporarily stored in the left storage chamber 23 of the upper collection hopper 21 with the discharge gate 28 being closed. The discharge gate 28 is opened when the discharge gate 29 of the right storage chamber 24 is closed, and the articles are thrown into the lower collection hopper 22. The articles are temporarily stored in the lower collection hopper 22 and then thrown into the packaging machine vertically downward.

The storage chambers 23 and 24 of the upper collection hopper 21 that store therein the articles discharged from the inner and outer collecting chutes 13 and 14 are integrally coupled to each other with the partition wall 95 interposed therebetween as their boundary. In contrast to the prior art illustrated in Fig. 13 wherein the collection hoppers 66 and 67 are separately provided, the lower openings of the storage chambers 23 and 24 may be located in proximity to each other, and the inner surfaces on which the articles are guided to be discharged may be inclined at steep angles.

This reduces time required for, of the articles alternately discharged from the storage chambers 23 and 24, the rear end of a rearmost article to arrive at the packaging machine right after the front edge of a foremost article arrived at the packaging machine, or string-out described earlier, thereby improving the weighing speed with no risk of imperfect sealing due to the articles partly trapped in a part-to-be-sealed of the packing material in the packaging machine.

The discharge gates 28 and 29 of the storage chambers 23 and 24 oscillatably supported around the common supporting point shaft 30 may be compactly structured.

The lower collection hopper 22 temporarily stores therein the articles discharged from the storage chambers 23 and 24 of the upper collection hopper 21. When the discharge gates 42 and 43 are opened, the lower collection hopper 22 drops the articles downward into the input port of the packaging machine not illustrated in the drawings.

In case of using smaller bags, naturally with smaller capacities, in the packaging machine, the opening of the forming tube 74 in communication with the input port 71 of the packaging machine 70 illustrated in Fig. 14 should be reduced in diameter. To throw the articles having a weight that falls within a predetermined weight range into the forming tube 74 thus having a smaller opening, the articles are likely to contact an opening edge of the forming tube 74 unless the articles are dropped from right above the forming tube 74. Any of the articles that contacted the opening edge may arrive later than the other articles at the position of the lateral sealing apparatus 80 below the forming tube 74. Such an article may be trapped in a part-to-be-sealed of the packing material during the lateral sealing, resulting in imperfect sealing.

This embodiment provides the lower collection hopper 22 immediately above the input port of the packaging machine, effectively preventing the occurrence of imperfect sealing in the packaging machine.

### Another Embodiment

The invention may be implemented as described below.
1) The upper collection hopper 21 according the embodiment described above has two storage chambers 23 and 24 that temporarily store therein the articles discharged from two discharge paths formed by two collecting chutes 13 and 14 and then drop the articles downward. According to another embodiment of the invention, there may be three or more storage chambers that temporarily store therein the articles discharged from three or more discharge paths and then drop the articles downward. These three or more storage chambers are juxtaposed to one another, and adjacent ones of the storage chambers are defined by a partition wall interposed therebetween as their boundary. Of the juxtaposed storage chambers, two storage chambers on both end sides each have one discharge gates 28, 29 on a side thereof facing the adjacent storage chamber, as with the storage chambers 23 and 24. Any storage chambers but the two on both end sides are interposed between the adjacent storage chambers. These storage chambers each have discharge gates on a side thereof facing one of the adjacent storage chambers and another side thereof facing the other storage chamber.
   In the case of three storage chambers, for example, a storage chamber having a rectangular upper opening, for example, may be disposed between the storage chambers 23 and 24 according to the foregoing embodiment. The storage chambers 23 and 24 are located on both end sides, and a storage chamber is interposed between these storage chambers. The storage chamber in the middle similarly has a downwardly tapered shape. This storage chamber in the middle has, in its lower part, an opening facing the discharge gate 28 of the storage chamber 23 and an opening facing the discharge gate 29 of the storage chamber 24, wherein these openings are opened and closed by the respective discharge gates.
2) The lower collection hopper 22 may be omitted, in which case the articles may be dropped directly from the upper collection hopper 21 into the input port of the packaging machine.
3) The partition wall 95 of the upper collection hopper 21 is formed by joining the vertical walls 25a and 26a of the two hopper bodies 25 and 26. Instead, the partition wall may consist of one vertical wall.
4) In the upper collection hopper 21, the front-rear pair of supporting point bosses 29a of the discharge gate 29 may be located on the outer or inner side of the front-rear pair of supporting point bosses 28a of the discharge gate 28. Then, the respective supporting point bosses thus arranged may be supported by inserting/fitting to the supporting point shaft 30.
5) Depending on properties of the articles, overall shape of the upper end openings of the upper collection hopper 21 may be substantially rectangular in top view with four corners curved at a relatively large curvature.
6) According to the embodiment described so far, two discharge paths are formed by the inner and outer collecting chutes, however, this is a nonlimiting example. Two discharge paths may be provided by, for example, dividing an annularly arranged weigh hopper into a right half and a left half to form a discharge path by way of the left half weigh hopper and another discharge path by way of the right half weigh hopper.

### DESCRIPTION OF REFERENCE NUMERALS

- 1: combination scale
- 21: upper collection hopper
- 22: lower collection hopper
- 23: storage chamber
- 24: storage chamber
- 28: discharge gate
- 28a: supporting point boss
- 29: discharge gate
- 29a: supporting point boss
- 30: supporting point shaft
- x: supporting point

## Claims

1. A collection hopper (21) configured to temporarily store articles thrown therein from two discharge paths and then discharges the articles downward, the collection hopper comprising two storage chambers (23,24) that store therein the articles discharged from the discharge paths, respectively, wherein
the two storage chambers are integrally coupled into a single unit with a partition wall (95) interposed therebetween as a boundary, and
the storage chambers (23,24) respectively include upper openings facing discharge ports of the discharge paths, lower openings through which the articles are to be discharged downward, and gates (28,29) that open and close the lower openings,
wherein the storage chambers (23,24) have a downwardly tapered shape, and the patition wall (95) has a vertical flat shape, and the gates (28,29) of the storage chambers (23,24) respectively open and close the lower openings of the storage chambers (23,24), and
**characterised in that** the gates (28,29) of the respective storage chambers (23,24) oscillate around a supporting point to separately open the lower openings of the storage chambers (23,24), such that when one of the gates (28,29) opens an opening of one of the storage chambers (23,24), the other gate (29,28) closes the opening of the other storage chamber (24,23),
each of the storage chambers (23, 24) has a storage space for the articles to be stored, the storage space being defined by the partition wall (95), a curved peripheral wall (25b, 26b) continuous to the partition wall (95), and the gates (28, 29),
the upper openings of the storage chambers (23, 24) have a semi-elliptical shape in top view and are symmetrical with respect to the partition wall (95) at the center,
the lower openings of the storage chambers (23, 24) are formed diagonally downward from a lower end of the partition wall (95) toward the peripheral walls (25b, 26b), and
the storage chambers (23, 24), when the gates (28, 29) open, discharge the articles diagonally downward toward the center.

2. A combination scale, comprising:
a plurality of hoppers (10) to be combined configured to temporarily store and then discharge articles thrown therein;
two collecting chutes (13,14) below the plurality of hoppers (10) to be combined, the two collecting chutes (13,14) collecting the articles selectively discharged from a combination of the hoppers (10) that store therein the articles having a weight that falls within a predetermined weight range and discharging the collected articles through discharge ports (13a,14a) at lower ends thereof; and
a collection hopper according to claim 1, wherein the upper openings of the storage chambers (23,24) face the discharge ports (13a,14a) of the two collecting chutes (13,14).

## Patentansprüche

1. Ein Sammeltrichter (21), ausgeführt zur Zwischenspeicherung von Artikeln, die aus zwei Entladungsstrecken in diesen eingeworfen werden und zur Ausgabe der Artikel nach unten, wobei der Sammeltrichter zwei Stauräume (23, 24) umfasst, welche darin die Artikel speichern, die jeweils von den Entladungsstrecken entladen werden, wobei
die zwei Stauräume als eine einstückige Einheit mit einer dazwischen angeordneten Trennwand (95) als Begrenzung ausgeführt sind, und
die Stauräume (23, 24) jeweils obere Öffnungen, die den Ausgabeöffnungen der Entladungsstrecken zugewandt sind, unteren Öffnungen, durch welche die Artikel nach unten ausgegeben werden, und Klappen (28, 29), welche die unteren Öffnungen öffnen und schließen, umfassen, wobei
die Stauräume (23, 24) eine nach unten zusammenlaufende Form haben, und die Trennwand (95) eine senkrechte, flache Form hat, und die Klappen (28, 29) der Stauräume (23, 24) jeweils die unteren Öffnungen der Stauräume (23, 24) öffnen und schließen, und **dadurch gekennzeichnet, dass**
die Klappen (28, 29) der jeweiligen Stauräume (23, 24) um einen Haltpunkt schwingen, um die unteren Öffnungen der Stauräume (23, 24) einzeln so zu öffnen, dass dann, wenn eine der Klappen (28, 29) eine Öffnung eines der Stauräume (23, 24) öffnet, die andere Klappe (29, 28) die Öffnung des anderen Stauraums (24, 23) schließt,
jeder der Stauräume (23, 24) einen Stauraum für die Speicherung der zu speichernden Artikel hat, wobei der Stauraum durch die Trennwand (95) definiert wird, eine bogenförmige Außenwand (25b, 26b) anschließend an die Trennwand (95) hat, und die Klappen (28, 29) hat,
die oberen Öffnungen der Stauräume (23, 24) in Draufsicht eine halb-elliptische Form haben und symmetrisch in Bezug auf die Trennwand (95) in der Mitte sind,
die unteren Öffnungen der Stauräume (23, 24) sich von einem unteren Ende der Trennwand (95) schräg nach unten in Richtung der Außenwände (25b, 26b) erstrecken,
die Stauräume (23, 24), wenn die Klappen (28, 29) sich öffnen, die Artikel schräg nach unten in Richtung der Mitte ausgeben.

2. Eine Kombinationswaage, umfassend:
eine Vielzahl an zu kombinierenden Trichtern (10), ausgeführt, um hineingeworfene Artikel zwischenzuspeichern und dann auszugeben;
zwei unterhalb der Vielzahl an Trichtern (10) angeordnete zu kombinierende Sammelrutschen (13, 14), wobei die zwei Sammelrutschen (13, 14) die Artikel sammeln, die selektiv von einer Kombination von Trichtern (10) ausgegeben werden, welche die Artikel speichern, deren Gewicht in einen vorbestimmten Gewichtsbereich fällt und welche die gesammelten Artikel durch Ausgabeöffnungen (13a, 14a) an ihrem unteren Ende ausgeben, und
einen Sammeltrichter nach Anspruch 1, wobei die oberen Öffnungen der Stauräume (23, 24) den Ausgabeöffnungen (13a, 14a) der zwei Sammelrutschen (13, 14) zugewandt sind.

## Revendications

1. Trémie de collecte (21) configurée de façon à stocker temporairement des articles jetés à l'intérieur de celle-ci à partir de deux trajets de décharge, et qui décharge ensuite les articles vers le bas, la trémie de collecte comprenant deux chambres de stockage (23, 24) qui stockent à l'intérieur de celles-ci les articles déchargés à partir des trajets de décharge, respectivement, dans laquelle :
les deux chambres de stockage sont couplées d'un seul tenant sous la forme d'une unité unique avec une paroi de séparation (95) interposée entre celles-ci à titre de limite, et
les chambres de stockage (23, 24) comprennent respectivement des ouvertures supérieures faisant face à des orifices de décharge des trajets de décharge, des ouvertures inférieures à travers lesquelles les articles doivent être déchargés vers le bas, et des portes (28, 29) qui ouvrent et qui ferment les ouvertures inférieures, dans laquelle :
les chambres de stockage (23, 24) ont une forme effilée vers le bas, et la paroi de séparation (95) a une forme verticale plate, et les portes (28, 29) des chambres de stockage (23, 24) ouvrent et ferment, respectivement, les ouvertures inférieures des chambres de stockage (23, 24), et
**caractérisée en ce que** :
les portes (28, 29) des chambres de stockage respectives (23, 24) oscillent autour d'un point de support de façon à ouvrir séparément les ouvertures inférieures des chambres de stockage (23, 24), de telle sorte que, lorsque l'une des portes (28, 29) ouvre une ouverture de l'une des chambres de stockage (23, 24), l'autre porte (29, 28) ferme l'ouverture de l'autre chambre de stockage (24, 23),
chacune des chambres de stockage (23, 24) comporte un espace de stockage pour les articles devant être stockés, l'espace de stockage étant défini par la paroi de séparation (95), une paroi périphérique incurvée (25b, 26b) continue avec la paroi de séparation (95), et les portes (28, 29),
les ouvertures supérieures des chambres de stockage (23, 24) ont une forme semi-elliptique en vue de dessus, et sont symétriques par rapport à la paroi de séparation (95) au centre,
les ouvertures inférieures des chambres de stockage (23, 24) sont formées en diagonale vers le bas à partir d'une extrémité inférieure de la paroi de séparation (95) vers les parois périphériques (25b, 26b),
les chambres de stockage (23, 24), lorsque les portes (28, 29) s'ouvrent, déchargent les articles en diagonale vers le bas, en direction du centre.

2. Balance à combinaison, comprenant :
une pluralité de trémies (10) devant être combinées, configurées de façon à stocker temporairement, et puis décharger, des articles jetés à l'intérieur de celles-ci ;
deux goulottes de collecte (13, 14) en dessous de la pluralité de trémies (10) devant être combinées, les deux goulottes de collecte (13, 14) collectant les articles déchargés de façon sélective à partir d'une combinaison des trémies (10) qui stockent à l'intérieur de celles-ci les articles ayant un poids compris à l'intérieur d'une plage de poids prédéterminée et déchargeant les articles collectés à travers des orifices de décharge (13a, 14a) à des extrémités inférieures de celles-ci ; et
une trémie de collecte selon la revendication 1, dans laquelle les ouvertures supérieures des chambres de stockage (23, 24) font face aux orifices de décharge (13a, 14a) des deux goulottes de collecte (13, 14).
